# FASCICULE DE BREVET EUROPEEN

(11) **EP 2 825 709 B1**
(45) Date de publication et mention de la délivrance du brevet: **04.05.2016**
(21) Numéro de dépôt: 13707876.2
(22) Date de dépôt: 06.03.2013
(51) Int. Cl.: E04F 10/10, E06B 7/082, H01L 31/042

(54) **BRISE SOLEIL A LAMES ORIENTABLES**
SONNENBLENDE MIT VERSTELLBAREN LAMELLEN
SUN SHADE WITH ADJUSTABLE BLADES

(30) Priorité: 13.03.2012 FR 1252267
(43) Date de publication de la demande: 21.01.2015
(73) Titulaire: Commissariat à l'Énergie Atomique et aux Énergies Alternatives, 75015 Paris (FR)
(72) Inventeur: BOILLOT, Benjamin, F-38330 Saint-Ismier (FR)
(74) Mandataire: GIE Innovation Competence Group
(86) Numéro de dépôt international: PCT/EP2013/054533
(87) Numéro de publication internationale: WO 2013/135542

(56) Documents cités:
- EP-A1- 0 593 201
- DE-B- 1 257 407
- US-A- 4 389 816

## Description

L'invention concerne les équipements pour vitrages de bâtiments, et en particulier les brise-soleil orientables associés à de tels vitrages.

Un brise-soleil est un élément d'architecture servant de pare-soleil. Le brise-soleil est notamment utilisé dans la construction de bâtiments en vue de répondre à la norme HQE, pour contrôler l'impact du soleil sur les vitrages. Un brise-soleil permet de protéger un vitrage de l'exposition solaire pour éviter la surchauffe ou l'éblouissement. Un exemple de brise*-*soleil est décrit dans le document DE 1257407B.

Un positionnement judicieux du brise-soleil permet de contrôler les apports solaires (chaleur, lumière, rayonnement ultra-violet) selon l'heure de la journée ou selon la saison. L'importance saisonnière sur l'apport solaire joue d'autant plus que le bâtiment est proche du cercle polaire. Les variations de hauteur de soleil par rapport à l'horizon sont alors plus importantes. En été, on cherche généralement à se protéger du rayonnement solaire. En hiver, on cherche à laisser pénétrer le rayonnement solaire jusqu'au fond des pièces du bâtiment pour mieux les éclairer et les chauffer.

Pour optimiser l'utilisation du soleil en fonction des conditions, les solutions de brise soleil les plus prometteuses comportent une géométrie variable. De tels brise-soleil incluent généralement des lames pivotantes. Les axes de rotation des lames sont généralement superposés verticalement dans la plupart des structures proposées. Les lames des brise-soleil sont généralement montées pivotantes sur un châssis. Généralement, l'axe de pivotement de la lame est disposé soit au niveau d'une extrémité transversale de cette lame la plus proche du bâtiment, soit à mi-largeur de cette lame. Chaque étage du bâtiment comporte alors une lame disposée sensiblement au niveau de son plafond, généralement au-dessus de l'extrémité supérieure de son vitrage.

Pour améliorer encore l'utilité des brise-soleil, les lames de certains brise-soleil sont couvertes de cellules photovoltaïques. Comme les brise-soleil sont destinés à être exposés au rayonnement solaire, ceux-ci peuvent ainsi produire une quantité non négligeable d'énergie électrique.

Pour la production d'électricité, on favorise des lames proches de l'horizontale en été, et des lames proches de la verticale en hiver.

Un brise-soleil dont les lames sont montées pivotantes au niveau de leur extrémité transversale peut présenter des inconvénients.

Dans l'hypothèse d'une lame de faible largeur, on rencontre :
- soit une première configuration dans laquelle l'axe de rotation d'une lame est disposé légèrement au-dessus du vitrage de l'étage concerné et en dessous du plafond de cet étage. Cette configuration apporte une bonne protection solaire l'été mais un apport énergétique passif médiocre l'hiver ;
- soit une deuxième configuration dans laquelle l'axe de rotation d'une lame est disposé au-dessus du plafond de cet étage, à proximité du sol de l'étage supérieur. Cette configuration apporte une protection solaire médiocre en été en contrepartie d'un apport énergétique satisfaisant l'hiver.

Dans l'hypothèse d'une lame de grande largeur, l'axe de rotation de la lame est disposé au-dessus du sol de l'étage supérieur. Une telle configuration présente l'inconvénient de nécessiter un cadre du brise-soleil dépassant par rapport à la toiture du bâtiment. Une telle configuration peut également s'avérer relativement coûteuse car nécessitant un dimensionnement plus important des lames, de leur guidage et de leur entraînement.

Un brise-soleil dont les lames sont montées pivotantes à la moitié de leur largeur ne résout pas complètement les problèmes mentionnés ci-dessus :
- une première configuration dans laquelle l'axe de rotation d'une lame est disposé légèrement au-dessus du vitrage de l'étage concerné et en dessous du plafond de cet étage apporte encore une bonne protection solaire l'été mais détériore toujours l'apport énergétique passif l'hiver ;
- une deuxième configuration dans laquelle l'axe de rotation d'une lame est disposé au-dessus du plafond de cet étage, à proximité du sol de l'étage supérieur, détériore encore la protection solaire en été en contrepartie d'un apport énergétique satisfaisant l'hiver.

Par ailleurs, un tel brise-soleil doit comporter des bras pour supporter l'axe de rotation d'une lame. D'une part, ces bras induisent un ombrage sur les cellules photovoltaïques. D'autre part, ces bras doivent comporter un dimensionnement important pour garantir la résistance du montage à la neige et au vent.

L'invention vise à résoudre un ou plusieurs de ces inconvénients. L'invention porte ainsi sur un bâtiment tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe de côté d'un bâtiment mettant en oeuvre un mode de réalisation de l'invention ;
- la figure 2 est une vue de face du bâtiment de la figure 1 ;
- la figure 3 est une vue de côté d'un mode de réalisation d'une lame pour un brise-soleil du bâtiment selon l'invention ;
- la figure 4 illustre un exemple de positionnement du brise-soleil en été ;
- la figure 5 illustre un exemple de positionnement du brise-soleil en hiver ;
- la figure 6 illustre une construction géométrique utilisable pour le dimensionnement d'une lame de brise-soleil ;
- la figure 7 illustre un exemple de structure de guidage d'une lame de brise-soleil ;
- les figures 8 et 9 sont des vues en perspective d'une variante de brise-soleil comportant une autre structure de guidage ;
- la figure 10 est une représentation schématique d'un perfectionnement de l'invention.

L'invention propose un bâtiment muni d'un vitrage disposé sur une façade du bâtiment et d'un brise-soleil comportant une paroi d'obscurcissement à inclinaison variable. Un support du brise-soleil guide cette paroi entre des première et deuxième positions, l'inclinaison par rapport à la verticale de la paroi dans la deuxième position étant supérieure à l'inclinaison de la paroi dans la première position. Dans la deuxième position, une première bordure transversale de la paroi est disposée au-dessous d'une deuxième bordure transversale de cette paroi. Entre les première et deuxième positions, le support guide la paroi selon une translation verticale induisant le relèvement de la deuxième bordure.

La première position de la paroi est configurée pour que dans cette première position, l'ombre de la paroi recouvre ledit vitrage de façade pour une illumination solaire du bâtiment à midi au solstice d'été. La deuxième position de la paroi est configurée pour que dans cette deuxième position, l'ombre de la paroi ne recouvre pas ledit vitrage de façade pour une illumination solaire du bâtiment à midi au solstice d'hiver.

Une telle configuration d'un brise-soleil permet d'utiliser une paroi relativement étroite pouvant à la fois obscurcir efficacement un vitrage contre le rayonnement solaire en été et permettre une exposition optimale du vitrage au rayonnement solaire en hiver.

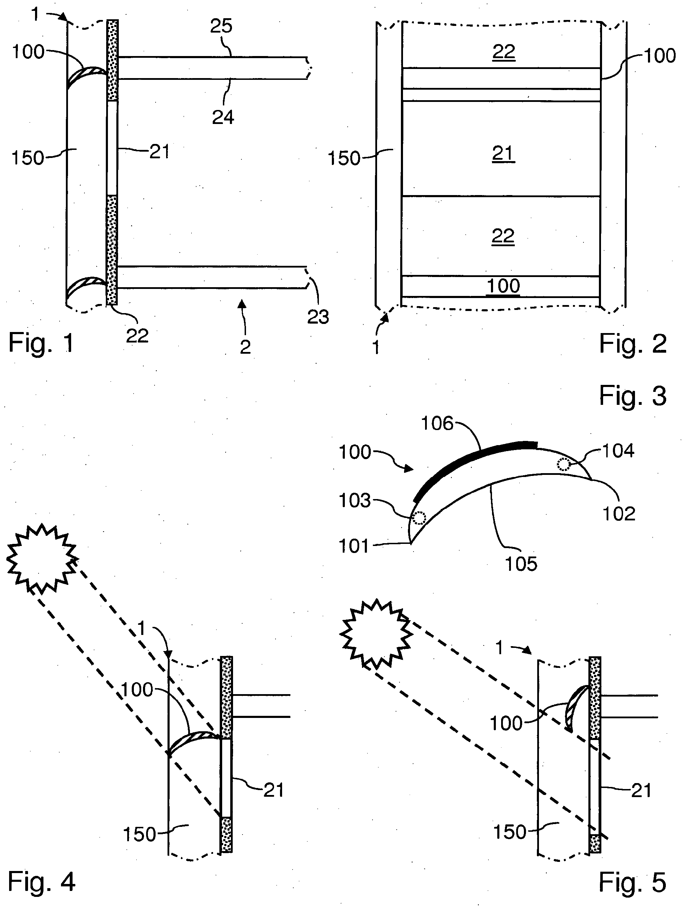

La figure 1 est une vue en coupe de côté d'un bâtiment 2 mettant en oeuvre un brise-soleil 1, selon un mode de réalisation de l'invention. La figure 2 est une vue de face de ce bâtiment 2. Le bâtiment 2 comporte une façade délimitant ses pièces par rapport à l'extérieur. La façade comporte des vitrages 21 destinés à permettre à la luminosité extérieure de pénétrer dans le bâtiment 2, tout en isolant thermiquement l'intérieur du bâtiment 2 par rapport à l'extérieur. Dans cet exemple, les vitrages 21 surmontent des allèges 22. Le bâtiment 2 comporte ici plusieurs étages délimités par des dalles horizontales 23. Une dalle horizontale 23 est surmontée par une surface de sol 25 d'un étage supérieur et surplombe une surface de plafond 24 d'un étage inférieur.

Un brise-soleil 1 est disposé à l'extérieur du bâtiment 2, à l'avant du vitrage 21. Le brise-soleil 1 comporte une paroi d'obscurcissement 100 illustrée de façon plus détaillée en vue de côté à la figure 3. La paroi d'obscurcissement 100 s'étend entre une première bordure transversale 101 et une deuxième bordure transversale 102. La paroi d'obscurcissement 100 réalise un obscurcissement de façon connue en soi, de sorte que cette paroi 100 ne laisse pas traverser ou ne laisse traverser qu'une proportion réduite de la lumière incidente. À cet effet, la paroi 100 comporte un matériau opaque, un matériau réfléchissant ou un matériau comportant un important coefficient d'absorption s'étendant entre la bordure transversale 101 et la bordure transversale 102. La paroi 100 est rigide, et peut être réalisée en tous matériaux appropriés.

Le brise-soleil 1 comporte un support 150 muni de montants latéraux s'étendant verticalement. Les parois d'obscurcissement 100 s'étendent axialement entre deux montants latéraux du support 150. Au niveau de leurs extrémités axiales, les parois 100 sont supportées et guidées par les montants latéraux. Les parois 100 peuvent à cet effet comporter des plots de guidage fixés à leurs extrémités axiales. A chaque extrémité axiale, une paroi 100 peut ainsi comporter un plot 103 situé au niveau de la bordure 101 et un plot 104 situé au niveau de la bordure 102. Chaque paroi 100 est associée à un vitrage 21 et disposée à proximité de la partie supérieure de ce vitrage 21.

Le support 150 guide la paroi 100 entre une première position et une deuxième position. Ces première et deuxième positions sont illustrées schématiquement aux figures 4 et 5 respectivement. Dans les première et deuxième positions, la deuxième bordure 102 est plus proche de la façade du bâtiment que la première bordure 101. Dans les première et deuxième positions, la deuxième bordure 102 est plus haute que la première bordure 101. Dans la première position, la paroi 100 comporte une première inclinaison par rapport à la verticale. Dans la deuxième position, la paroi 100 comporte une deuxième inclinaison par rapport à la verticale, cette deuxième inclinaison étant inférieure à la première inclinaison. Quelle que soit la position de la paroi 100, la position la plus haute de la première bordure est située en dessous de la position la plus basse de la deuxième bordure.

L'inclinaison par rapport à la verticale de la paroi 100 formant une lame 105 du brise-soleil 1 sera définie comme l'angle entre la verticale et le plan passant par la première bordure 101 et la deuxième bordure 102.

Afin d'optimiser le fonctionnement du brise-soleil 1 à la fois en hiver et en été, le support 150 guide la deuxième bordure 102 de la paroi 100 en translation verticale, de façon à relever cette deuxième bordure. Cette cinématique de la paroi 100 permet, avec la deuxième position, de dégager la paroi 100 du rayonnement du soleil incident sur le vitrage 21, lorsque le soleil est relativement bas comme en hiver. On maximise ainsi le réchauffement du bâtiment 2 par le rayonnement solaire. Cette cinématique de la paroi 100 permet, avec la première position, de placer la paroi 100 entre le rayonnement du soleil incident et le vitrage 21, lorsque le soleil est relativement haut comme en été. On minimise ainsi le réchauffement du bâtiment 2 par le rayonnement solaire, ainsi que la gêne visuelle d'un tel rayonnement. Par ailleurs, cette optimisation du rayonnement solaire peut être obtenue avec une paroi 100 présentant une largeur relativement réduite. Ainsi, le dimensionnement du support 150, de la paroi 100 et de son dispositif d'entraînement peut être plus réduit, les contraintes exercées par le vent ou la neige s'avérant relativement limitées. Par ailleurs, une paroi 100 d'une largeur réduite permet de supprimer ou de limiter le débordement d'une fonction de guidage de cette paroi jusqu'au niveau de l'étage supérieur.

L'entraînement de la paroi 100 entre les première et deuxième positions peut être réalisé par tous moyens appropriés. L'entraînement peut être manuel, l'utilisateur définissant alors la position de la paroi 100 entre les première et deuxième positions. L'entraînement peut également être électrique, la position de la paroi 100 pouvant alors être soit définie par l'utilisateur, soit contrôlée par un circuit de commande.

Le brise-soleil 1 comporte avantageusement des cellules photovoltaïques 106. Ces cellules photovoltaïques 106 sont par exemple fixées sur la face supérieure de la lame 100. Du fait de sa cinématique combinant une inclinaison et une élévation variable de la paroi 100, le brise-soleil 1 muni de cellules photovoltaïques 106 peut être orienté de façon optimale pour la récupération d'énergie solaire, sans pour autant altérer sa fonction d'obturation ou de transmission du rayonnement solaire à l'intérieur du bâtiment 2. Que ce soit à midi au solstice d'été ou midi au solstice d'hiver, les première et deuxième positions permettent de maintenir la paroi 100 perpendiculaire au rayonnement solaire, pour maximiser la récupération d'énergie par les cellules photovoltaïques 106.

Les figures 4 et 5 illustrent respectivement la paroi 100 dans sa première position et dans sa deuxième position. Dans sa première position, la paroi 100 a pour but de bloquer le maximum de rayonnement solaire sur le vitrage 21, pour une position du soleil à midi au solstice d'été. Pour une telle position du soleil, on souhaite limiter au maximum l'apport énergétique solaire dans le bâtiment 2, par exemple pour limiter la consommation d'une climatisation présente dans le bâtiment 2. La position de la paroi 100 ainsi que sa largeur sont configurées de sorte que l'ombre de la paroi 100 recouvre le vitrage 21 pour cette illumination.

Dans sa deuxième position, la paroi 100 a pour but de permettre la transmission du maximum de rayonnement à travers le vitrage 21, pour une position du soleil à midi au solstice d'hiver. Pour une telle position du soleil, on souhaite disposer au maximum de l'apport énergétique solaire à travers le vitrage 21. La position de la paroi 100 ainsi que sa largeur sont configurées de sorte que l'ombre de la paroi 100 ne recouvre pas le vitrage 21 pour cette illumination. L'ensemble du vitrage 21 reçoit ainsi l'illumination solaire.

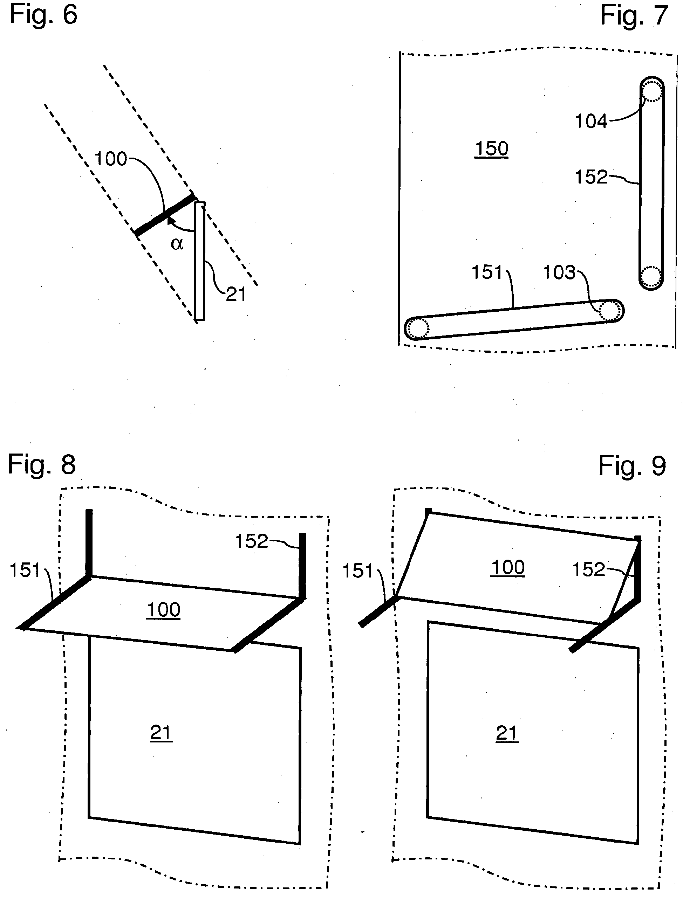

La figure 6 illustre de façon schématique une construction géométrique permettant de procéder au dimensionnement de la largeur de la paroi 100 en fonction de la hauteur du vitrage 21 et de l'emplacement du bâtiment 2. Pour un vitrage 21 d'une hauteur donnée, on dimensionne la largeur de la paroi 100 de sorte que son ombre, dans la première position, avec une illumination à midi au solstice d'été, recouvre le vitrage 21.

Par exemple, dans la ville de Lille, le soleil à midi au solstice d'été se trouve à une hauteur de 62,8°. L'inclinaison α de la paroi 100 par rapport à la verticale est ainsi fixée à 62,8°, à la fois pour optimiser la course de la paroi 100 et optimiser la récupération d'énergie solaire par des cellules photovoltaïques 106. En disposant la bordure 102 au niveau de l'extrémité supérieure du vitrage 21, une paroi 100 d'une largeur de 550 mm projette une ombre recouvrant une hauteur du vitrage 21 de 1200 mm.

Pour minimiser la course de la paroi 100 et optimiser la récupération d'énergie solaire par des cellules photovoltaïques 106, l'inclinaison de la paroi 100 par rapport à la verticale dans la deuxième position est égale à la hauteur du soleil à midi au solstice d'hiver à Lille, c'est-à-dire 15,9°. Avec une deuxième position adéquate, l'ombre de la paroi 100 avec une telle illumination ne se superpose pas au vitrage 21.

Avantageusement, le support 150 guide la paroi 100 jusqu'à une troisième position, au-delà de la deuxième position. Dans cette troisième position, la paroi 100 est placée en position de sécurité, c'est-à-dire que les bordures 101 et 102 sont superposées pour maintenir la paroi 100 verticale. Avec une telle inclinaison, la paroi 100 est moins sensible à la pression exercée par le vent et évite d'être contrainte par un éventuel dépôt de neige.

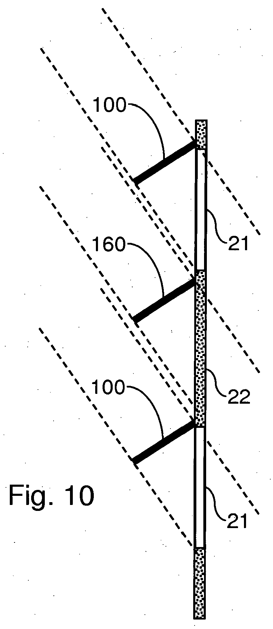

Avantageusement, des parois 100 de largeur réduite permettent de disposer des cellules photovoltaïques entre deux parois 100 successives. La figure 10 illustre un tel perfectionnement. Dans cet exemple, le brise-soleil 1 comporte une paroi 160 sur laquelle des cellules photovoltaïques sont fixées. La paroi 160 est disposée en vis-à-vis de l'allège 22, entre deux parois 100 successives. Pour une illumination à midi au solstice d'été, la paroi 160 se trouve hors de l'ombre de la paroi 100 disposée au-dessus. Pour cette même illumination, la paroi 160 ne projette pas d'ombre sur la paroi 100 disposée au-dessous. La paroi 160 peut être commandée pour adopter la même inclinaison que les parois 100, notamment en vue d'optimiser la génération d'énergie électrique par les cellules photovoltaïques. La paroi 160 peut être guidée et entraînée selon un simple mouvement de rotation par rapport au support 150. La paroi 160 peut notamment être guidée en rotation autour d'un axe passant par son extrémité la plus proche de la façade du bâtiment 2. La paroi 160 peut également être fixe.

La figure 7 illustre un premier exemple de structure de guidage pour la paroi 100 dans le support 150. Chaque montant latéral comporte une rainure 151 pour le guidage en coulissement du plot 103, et une rainure verticale 152 pour le guidage en coulissement du plot 104. La rainure 151 présente ici une légère inclinaison par rapport à l'horizontale. La rainure 152 peut également comporter une inclinaison comprise entre 0 et 15° par rapport à la verticale. Un guidage par les extrémités latérales de la paroi 100 permet d'éviter de disposer des éléments de guidage au surplomb de la lame 100, de tels éléments pouvant induire une ombre néfaste à la génération d'énergie électrique par des cellules photovoltaïques.

La position du plot 104 dans la rainure 152 peut être asservie par un circuit de commande. Le plot 104 peut être entraîné dans la rainure 152 par tous moyens appropriés, par exemple avec un entraînement par câble, par crémaillère ou par chaîne, sollicité par un moteur électrique. L'inclinaison de la paroi 100 par rapport à la verticale peut être définie par la rainure 151, définissant une position du plot 103 en fonction d'une position du plot 104 dans la rainure 152.

L'inclinaison de la paroi 100 par rapport à la verticale peut également être définie par un moteur électrique assurant une rotation de la paroi 100 autour du plot 104. Deux moteurs séparés pour l'entraînement des deux bordures permettent de garder une certaine souplesse pour permettre à l'utilisateur d'imposer une inclinaison de la paroi 100 qui n'est pas optimale pour la gestion de l'énergie. Il n'est alors pas nécessaire de procéder au guidage de la paroi 100 au niveau de sa bordure 101 par rapport au support 150.

Les figures 8 et 9 illustrent un deuxième exemple de structure de guidage pour la paroi 100. Dans cet exemple, deux guides verticaux 152 sont intégrés dans la façade du bâtiment 2, au-dessus d'un vitrage 21. Les guides verticaux 152 sont destinés à guider les plots 104 disposés au niveau de chaque extrémité axiale de la paroi 100. Deux guides sensiblement horizontaux 151 sont disposés en saillie par rapport à la façade du bâtiment 2. Les guides 151 s'étendent depuis l'extrémité inférieure des guides 152. Les guides 151 sont destinés à guider les plots 103 disposés au niveau de chaque extrémité axiale de la paroi 100.

Différents modes de fonctionnement peuvent être envisagés pour un circuit de commande définissant la position verticale de la deuxième bordure et l'inclinaison de la paroi 100.

Un circuit de commande peut notamment définir l'inclinaison optimale de la paroi 100 au cours de la journée, pour la génération d'énergie électrique par les cellules photovoltaïques. Ainsi, le circuit de commande peut entraîner la paroi 100 pour que son inclinaison reste sensiblement perpendiculaire au rayonnement solaire à un instant donné. Pour éviter un éblouissement des personnes présentes dans le bâtiment en cours de journée, un tel mode de fonctionnement peut par exemple être activé en dehors des jours d'ouverture pour des bureaux.

Le circuit de commande peut également positionner la paroi 100 chaque jour, avec une inclinaison optimale pour une hauteur du soleil à midi pour le jour concerné. Un tel fonctionnement permet de limiter la consommation d'énergie dans l'hypothèse où la paroi 100 est entraînée par un ou plusieurs moteurs électriques.

## Revendications

1. Bâtiment (2), **caractérisé en ce qu'**il inclut :
- un vitrage (21) disposé sur la façade du bâtiment et délimitant une pièce de ce bâtiment ;
- un brise-soleil (1) comprenant :
- une paroi d'obscurcissement (100) s'étendant entre des première et deuxième bordures transversales;
- un support (150) guidant la paroi entre une première position dans laquelle la paroi présente une première inclinaison par rapport à la verticale, et une deuxième position dans laquelle la paroi présente une deuxième inclinaison par rapport à la verticale, la deuxième inclinaison étant inférieure à la première et la deuxième bordure étant située au dessus de la première bordure dans la deuxième position ; entre les première et deuxième positions, le support guidant la deuxième bordure de la paroi selon une translation verticale induisant le relèvement de cette deuxième bordure ; la première position de la paroi (100) étant configurée pour que dans cette première position, l'ombre de la paroi recouvre ledit vitrage de façade pour une illumination solaire du bâtiment à midi au solstice d'été ; la deuxième position de la paroi étant configurée pour que dans cette deuxième position, l'ombre de la paroi ne recouvre pas ledit vitrage de façade pour une illumination solaire du bâtiment à midi au solstice d'hiver.

2. Bâtiment selon la revendication 1, dans lequel le support (150) guide la première bordure (101) en coulissement entre les première et deuxième positions.

3. Bâtiment selon la revendication 2, dans lequel le support (150) comporte des première et deuxième coulisses guidant respectivement les première et deuxième bordures en coulissement entre les première et deuxième positions.

4. Bâtiment selon l'une quelconque des revendications précédentes, dans lequel la hauteur de la première bordure pour la deuxième position de la paroi est disposée sous la hauteur de la deuxième bordure quelle que soit la position de la paroi entre les première et deuxième positions.

5. Bâtiment selon l'une quelconque des revendications précédentes, dans lequel le support (150) guide la paroi (100) jusqu'à une troisième position dans laquelle la paroi présente une inclinaison verticale.

6. Bâtiment selon l'une quelconque des revendications précédentes, dans lequel ladite paroi (100) est rigide.

7. Bâtiment selon l'une quelconque des revendications précédentes, comprenant des cellules photovoltaïques (106) fixées sur la face supérieure de la paroi d'obscurcissement (100).

8. Bâtiment selon l'une quelconque des revendications précédentes, dans lequel la paroi s'étend entre des troisième et quatrième bordures axiales, et dans lequel le support (150) guide la paroi (100) au niveau de ces troisième et quatrième bordures axiales.

9. Bâtiment selon l'une quelconque des revendications précédentes, incluant:
- une allège (22) surmontée par ledit vitrage (21) ;
- une autre paroi (160) sur laquelle des cellules photovoltaïques sont fixées, dont l'ombre se projette sur l'allège (22), et se trouvant hors de l'ombre de la paroi dudit brise-soleil pour une illumination solaire du bâtiment à midi au solstice d'été.

10. Bâtiment selon l'une quelconque des revendications précédentes, dans lequel la deuxième bordure (102) est la plus proche de la façade du bâtiment.

## Patentansprüche

1. Gebäude (2), **dadurch gekennzeichnet, dass** es Folgendes aufweist:
- eine Verglasung (21), die auf der Fassade des Gebäudes angeordnet ist und einen Teil dieses Gebäudes begrenzt;
- eine Sonnenblende (1), umfassend:
- eine Wand zum Abdunkeln (100), die sich zwischen einem ersten und zweiten transversalen Rand erstreckt;
- einen Träger (150), der die Wand zwischen einer ersten Position, in der die Wand eine erste Neigung in Bezug auf die Vertikale aufweist, und einer zweiten Position, in der die Wand eine zweite Neigung in Bezug auf die Vertikale aufweist, führt, wobei die zweite Neigung gegenüber der ersten geringer ist und wobei der zweite Rand über dem ersten Rand in der zweiten Position angeordnet ist; wobei der Träger, der den zweiten Rand der Wand nach einer vertikalen Translation führt, zwischen der ersten und zweiten Position das Anheben dieses zweiten Randes veranlasst; wobei die erste Position der Wand (100) konfiguriert ist, damit der Schatten der Wand in dieser ersten Position die Verglasung der Fassade für eine Sonnenbeleuchtung des Gebäudes mittags zur Sommersonnenwende bedeckt; wobei die zweite Position der Wand konfiguriert ist, damit der Schatten der Wand in dieser zweiten Position die Verglasung der Fassade für eine Sonnenbeleuchtung des Gebäudes mittags zur Wintersonnenwende nicht bedeckt.

2. Gebäude nach Anspruch 1, wobei der Träger (150) den ersten Rand (101) zwischen der ersten und der zweiten Position in Verschiebung führt.

3. Gebäude nach Anspruch 2, wobei der Träger (150) eine erste und zweite Gleitschiene aufweist, die jeweils den ersten und zweiten Rand zwischen der ersten und der zweiten Position in Verschiebung führt.

4. Gebäude nach einem der vorhergehenden Ansprüche, wobei die Höhe des ersten Randes für die zweite Position der Wand unter der Höhe des zweiten Randes angeordnet ist, unabhängig von der Position der Wand zwischen der ersten und zweiten Position.

5. Gebäude nach einem der vorhergehenden Ansprüche, wobei der Träger (150) die Wand (100) bis zu einer dritten Position führt, in der die Wand eine vertikale Neigung aufweist.

6. Gebäude nach einem der vorhergehenden Ansprüche, wobei die Wand (100) starr ist.

7. Gebäude nach einem der vorhergehenden Ansprüche, umfassend photovoltaische Zellen (106), die auf der Oberseite der Wand zum Abdunkeln (100) befestigt sind.

8. Gebäude nach einem der vorhergehenden Ansprüche, wobei sich die Wand zwischen dem dritten und vierten axialen Rand erstreckt, und wobei der Träger (150) die Wand (100) an diesem dritten und vierten axialen Rand führt.

9. Gebäude nach einem der vorhergehenden Ansprüche, das Folgendes aufweist:
- eine Brüstung (22), die von der Verglasung (21) überragt ist;
- eine andere Wand (160), auf der photovoltaische Zellen befestigt sind, deren Schatten auf die Brüstung (22) projiziert wird und die sich außerhalb des Schattens der Wand der Sonnenblende für eine Sonnenbeleuchtung des Gebäudes mittags zur Sommersonnenwende befindet.

10. Gebäude nach einem der vorhergehenden Ansprüche, wobei der zweite Rand (102) der der Fassade des Gebäudes am nächsten liegende ist.

## Claims

1. Building (2), **characterized in that** it includes:
- a glazing (21) arranged on the front of the building and delimiting a room of this building;
- a sunshade (1) comprising:
- a darkening wall (100) extending between first and second transverse edges;
- a support (150) guiding the wall between a first position in which the wall exhibits a first inclination relative to the vertical, and a second position in which the wall exhibits a second inclination relative to the vertical, the second inclination being less than the first and the second edge being situated above the first edge in the second position; between the first and second positions, the support guiding the second edge of the wall in a vertical translation inducing the raising of this second edge; the first position of the wall (100) being configured so that, in this first position, the shadow of the wall covers said front glazing for a solar illumination of the building at midday on the summer solstice; the second position of the wall being configured so that, in this second position, the shadow of the wall does not cover said front glazing for a solar illumination of the building at midday on the winter solstice.

2. Building according to Claim 1, in which the support (150) guides the first edge (101) by sliding between the first and second positions.

3. Building according to Claim 2, in which the support (150) comprises first and second slides respectively guiding the first and second edges by sliding between the first and second positions.

4. Building according to any one of the preceding claims, in which the height of the first edge for the second position of the wall is arranged under the height of the second edge regardless of the position of the wall between the first and second positions.

5. Building according to any one of the preceding claims, in which the support (150) guides the wall (100) to a third position in which the wall exhibits a vertical inclination.

6. Building according to any one of the preceding claims, in which said wall (100) is rigid.

7. Building according to any one of the preceding claims, comprising photovoltaic cells (106) fixed onto the top face of the darkening wall (100).

8. Building according to any one of the preceding claims, in which the wall extends between third and fourth axial edges, and in which the support (150) guides the wall (100) at these third and fourth axial edges.

9. Building according to any one of the preceding claims, including:
- an apron (22) topped by said glazing (21);
- another wall (160) on which photovoltaic cells are fixed, the shadow of which is projected onto the apron (22), and located out of the shadow of the wall from said sunshade for a solar illumination of the building at midday on the summer solstice.

10. Building according to any one of the preceding claims, in which the second edge (102) is closest to the front of the building.
